# EUROPEAN PATENT APPLICATION

(11) **EP 1 061 191 A2**
(43) Date of publication of application: **20.12.2000**
(21) Application number: 00304960.8
(22) Date of filing: 13.06.2000
(51) Int. Cl.: E04B 1/94

(54) **A clip for mounting on a flange**

(30) Priority: 14.06.1999 GB 9913574
(71) Applicant: H Gordon & Co., Ltd., Frodsham, Warrington WA6 7AR (GB)
(72) Inventor: Dison, Julian Mark, Frodsham, Warrington WA6 6AS (GB); Dison, John Michael, Kingsley, Warrington WA6 6UD (GB)
(74) Representative: Cardwell, Stuart Martin

(57) **Abstract**

A clip for mounting on a flange and comprising a length of wire which is bent to form first (7, 9, 13; 107, 109) and second element (21, 22: 124, 128) which, in use, are disposed to one side and the other side of said flange, and a connecting limb portion (5; 105) traversing, in use, across the edge of the flange and connecting said first and second elements, first (1, 10) and second (3, 103) free ends associated respectively with the first and second elements, said first element comprising a first limb (7, 107) connecting with the connecting limb portion by a first bend (11, 111) and extending away therefrom over the flange and having a forward return bend (3; 113) to a second limb (9: 109) which extends back towards the edge of the flange at a position spaced from said first bend, said second limb leading to said first free end, said second element connecting with the other end of the connecting limb by way of a second bend (25, 125) and extending across said other side of the flange to said second free end, said second element having interconnected spaced positions which, in use, engage with said other side of the flange at spaced positions straddling the position of engagement of the first element with said one side of the flange. There may be a line contact between said spaced positions.

## Description

The present invention relates to a clip for mounting on a flange and in particular to a clip for attaching sheet material to steelwork, especially insulation for fire protection purposes, but without limitation to same.

There are many instances were steelwork has to have sheet material secured to it. One particular situation is the application of insulation to steelwork to provide fire protection. The steelwork has flanges and different thickness of flanges are employed according to the structural requirements of the steelwork. The flanges may range from 10 mm to 35 mm in thickness and it would be desirable if one clip could be used for such a range of flange thicknesses.

US Patent No. 4043092 describes a prior art clip for attaching insulation to steelwork. The clip comprises a length of wire which is bent to form two free ends intended to be disposed substantially perpendicular to one another so that either or both may have the insulation material impaled thereon. The wire is bent around on itself in the manner of a spiral but with a series of straight sections each connected by a substantially 90° bend. This provides two straight sections which, in use, abut one side of the flange and two other straight sections which abut the other side of the flange and conveniently referred to as first and second elements respectively. A straight section of wire traverses the edge of the flange and connects the first and second elements. The length of the connecting element determines the maximum thickness of flange to which the clip can be fitted but nevertheless it has been found that thus design of clip is such that it is not readily suited to a wide range of flange thicknesses making it necessary to make a number of different sizes of clip, each of which is capable of being fitted to a limited range of flange thicknesses. Furthermore the prior art clip presents stability problems, it cannot be used with dovetail decking and it is awkward to fit on thick flanges because the profile follows around and the top and bottom portions overlie one another.

An alternative design of clip which is able to accommodate a wide range of flange thicknesses and which offers improved stability is described in EP 0751263. The clip provides a first abutment means which in use co-operates with one side of the flange and two second abutment means which in use, co-operate with the other side of flange. The first abutment means is intermediate the two second abutment means and thus requires two interconnecting limbs to traverse the edge of the flange. The clip provides two free ends associated with the respective second abutment means.

The present invention aims to provide a clip which can be used for a wide range of flange thicknesses and yet which does not require two connecting limb portions traversing the edge of the flange.

Accordingly, the present invention provides a clip for mounting on a flange and comprising a length of wire which is bent to form first and second elements which, in use, are disposed to one side and the other side of said flange, and a connecting limb portion traversing, in use, across the edge of the flange and connecting said first and second elements, first and second free ends associated respectively with the first and second elements, said first element comprising a first limb connecting with the connecting limb portion by a first bend and extending away therefrom over the flange and having a forward return bend to a second limb which extends back towards the edge of the flange at a position spaced from said first bend, said second limb leading to said first free end, said second element connecting with the other end of the connecting limb by way of a second bend and extending across said other side of the flange to said second free end, said second element having interconnected spaced positions which, in use, engage with said other side of the flange at spaced positions straddiing the position of engagement of the first element with said one side of the flange.

The spaced positions may constitute occasional contact points with the flange. Preferably there are at least two points of contact with the flange at positions straddling the position of contact of the first element. However, there may be intermediate contact positions and/or lines of contact and it is preferable that as much as possible of the second element lie in close proximity with the flange, up to equal contact through out the second element. The second element at least between said spaced positions is preferably disposed in a plane which lies substantially parallel with the plane of the flange. The second free end is connected to said second element by a bend (referred to as a second element end bend) so that the second free end is disposed substantially perpendicular to a plane in which said second element is disposed. Said second element (between said second bend and said second element end bend) may comprise a single limb which is curved there between or at least between said spaced positions or two or more straight limbs connected by respective bends. The second element may extend to a position adjacent the edge of the flange at which said second element end bend is disposed. Said second bend is preferably an acute bend and this has been found to be advantageous as it encourages the second element to lie flat against the flange.

By configuring the second element to extend beyond the first element so that it has parts straddling same, the clip is more easily fitted onto the flange. This is especially the case the thicker the flange. Making the first element and the second element different lengths such that they extend onto the flange by different amounts, also aids fitting. This also aids stability.

The first and second limbs of the first element preferably comprise a loop. In one embodiment said elements are disposed in a common plane which plane is, in use, substantially parallel to the plane of the flange. In another embodiment the forward return bend is such that when applied to a flange one or both of the said first and second limbs is displaced from a plane of said flange. However, it is preferred for at least said second limb to be disposed in the same plane as said flange when in the installed position. Said first bend may be an acute bend which operates in conjunction with the compound bend of the forward return bend to dispose said second limb in the plane of the flange.

The first element is constructed as a loop to enable the clip to be used where dovetail decking is fitted to the steelwork. The narrow width of the loop easily fits in the dovetail sections. Good stability is achieved by having the end of the second element at which the projecting end is located disposed adjacent to the edge of the flange. However, this is not essential. Good stability can be achieved with said end spaced from the edge of the flange although in such a situation stability is aided by arranging for the length of the first element to exceed the length of second element. In this context length means the distance that the first and second elements project onto the flange.

Optionally said second limb may be provided with a bend positioned substantially in alignment with said first bend to provide a drop limb extending substantially in the same plane as the connecting limb, in use, so as to lie across the edge of the flange. Where provided said drop limb has a bend spaced from said drop bend which serves to position said first free end to extend from the edge of the flange to be disposed substantially perpendicular to said second free end.

Alternatively said second element comprises an are extending from the other end of the connecting limb past the position of the first element to a return bend disposed, in use, adjacent to the edge of the flange and which leads to a third limb extending onto the flange to position said second element end bend (which leads to said second free end) at a position on the flange inset from the edge thereof.

The clips may be constructed as left or right handed.

The present invention will now be described further by way of example only with reference to the accompanying drawings; in which: -
Figure 1 is a perspective view of a clip according to a first embodiment of the invention,
Figure 2 is a plan view of the clip of Figure 1,
Figure 2a is a side view looking in the direction of arrow B of Figure 2,
Figure 3 is a view looking in the direction of arrow A of Figure 2 with the clip shown in an installed position,
Figure 4 is a perspective view of a second embodiment of clip according to the invention,
Figure 5 a front view of the clip of Figure 4 substantially as made,
Figure 6 is a front view looking on A of the clip of Figure 4 in an installation position,
Figure 7 is a perspective view of a third embodiment of clip according to the present invention,
Figure 8 is a front view looking on A of the clip of Figure 7 substantially as made,
Figure 9 is a front view of the clip of Figure 7 shown in an installed position,
Figure 10 is a perspective view of a fourth embodiment of clip according to the invention, and
Figure 11 is a perspective view of a fifth embodiment of clip according to the invention.

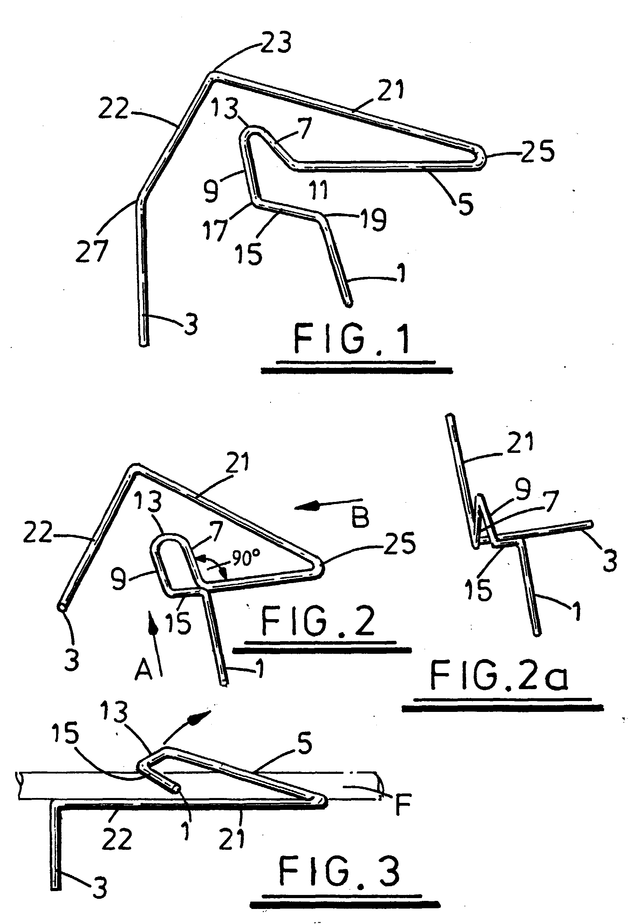

Referring firstly to the drawings of Figures 1 to 3, a first embodiment of clip is illustrated which comprises a length of wire which is bent to form first and second projecting end portions 1, 3, and connecting limb means 5 which connects a first element with a second element. The first element comprises first and second limbs 7, 9. The first limb connects with the connecting limb portion 5 by way of a first bend 11 which turns through approximately 90°. The first and second limbs 7, 9 are connected by a forward going return bend 13 which turns through approximately 180°. This results in the second limb lying substantially parallel to the first limb and extending in the opposite direction. The first and second limbs are substantially the same length. The second limb 9 connects with the first projecting end 1 by way of a drop limb 15 and respective right angled bends 17, 19. Preferably, the limbs 5 and 15 lie in substantially the same plane and the first projecting end 1 is disposed substantially perpendicular to said plane.

In the illustrated embodiment the second element comprises two limbs conveniently referred to as third and fourth limbs 21, 22. They are connected by a substantially right-angled bend 23 although other angles could be used. The limb 21 connects with the connecting limb 5 by way of a second bend 25. The included angle of the second bend is acute as seen more clearly in Figure 2. The limbs 21 and 22 lie in a common plane. Limb 22 connects with the second projecting end 3 by way of a substantially right-angled bend 27. It will be noted that the second limb extends onto the flange by a greater amount than the first element.

Preferably, the limb 7 is inclined with respect to the plane occupied by limbs 21 and 22 in its as made condition - see Figure 2a, similarly it is preferred that limb 9 is inclined with respect to limb 7 again see Figure 2a in its as made condition.

Figure 3 illustrates the configuration adopted when the clip is applied to a relatively narrow flange F. Limbs 21 and 22 of the second element lie substantially flat against the underside of a flange. The first element co-operates with the opposite side of the flange. Thus the second element straddles the point of contact of the first element with the flange. In the illustrated embodiment the second limb 9 lies substantially flat against the flange whilst limb 7 is displaced due to the aforementioned angles of bends 11 and 13. Where these bends are not angled relative to the plane occupied by the limbs 21 and 22 then both limbs 7 and 9 may lie flat against the surface of the flange. In the installed position the projecting free ends 1 and 3 lie substantially perpendicular to one another ready to receive insulation material. The design is such that the ends remain perpendicular when the clip is applied to different thiscknesses of flange. This is advantageous.

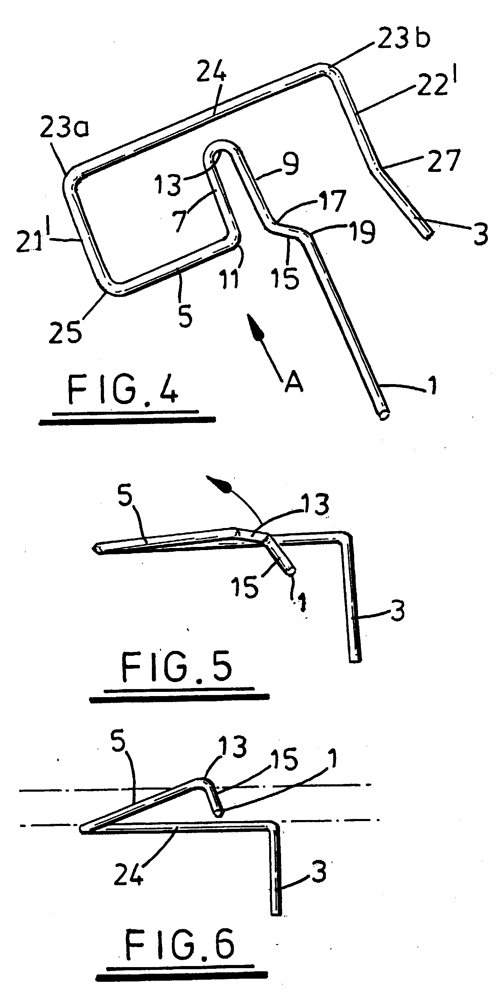

Another embodiment of the invention is now described with reference to Figures 4-6. This embodiment is substantially the same as that described with reference to Figures 1 to 3 and corresponding reference numerals have been used to denote identical parts and are not described in further detail. The difference resides in the configuration of the second element as well as the fact the hand is reversed. In this embodiment the second element has three limbs. The additional limb 24 is disposed between limbs 21' and 22' and connected thereto by bends 23a, 23b. In the illustrated embodiment the angle of these bends is substantially 90°. In this embodiment the second bend 25 turns to approximately 90°. Just as with the embodiment of Figure 1 the arrangement of the second element serves to provide spaced positions which engage with one side of the flange at a position straddling the position of engagement of the first element with the other side of the flange. These spaced positions may be at the bends 25, 27 or part way along the limbs 21,22 as is the case for the first embodiment.

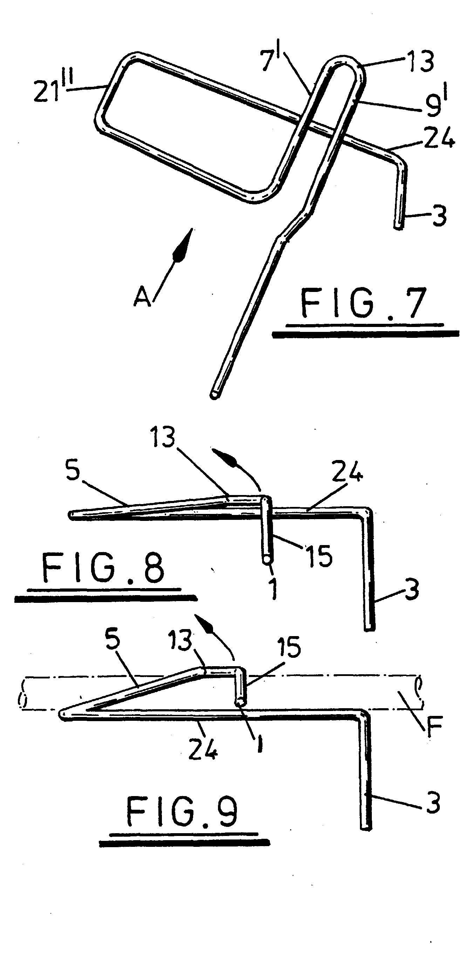

A third embodiment is described with reference to Figures 7-9. The construction is substantially the same as that of the embodiment of Figure 4 and serves to illustrate that the first element can have a greater projection on to the flange than the second element. Hence the increased length of limbs 7', 9' with a corresponding reduced width for limb 21, here referenced 21''. In this embodiment limb 22' is omitted and the second projecting end 3 is formed at the end of limb 24 such that, in use, the projecting end is set in from the edge of the flange compared with the previously described embodiments where the projecting end 3 is positioned closely adjacent the edge of the flange. Good stability is achieved in this embodiment by increasing the length of the first element so that it extends onto the flange by a greater amount than the second element.

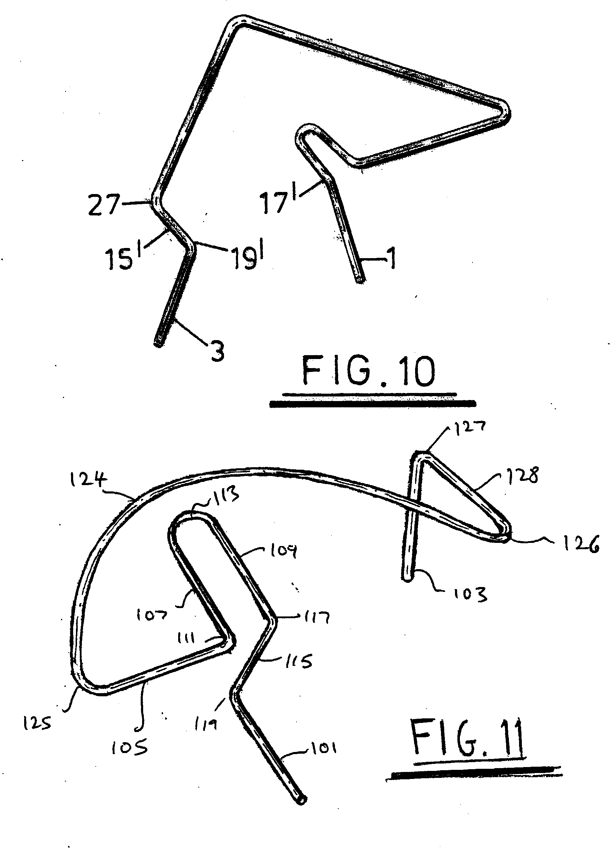

Figure 10 illustrates a further embodiment and serves to demonstrate that the orientation of the respective first and second ends 1, 3 can be reversed. A clip of the type shown in Figure 1 is illustrated for convenience but it could be any of the other clips. Thus the limb 1 which projects substantially perpendicular to the plane of the flange is now connected to the first element whilst the limb 3 which extends substantially perpendicular to the end 1 is now connected to the second element by way of a drop limb 15' and right angled bend 19' although not clearly apparent in the illustration. The drop limb and bends 27 and 19' may be omitted.

Figure 11 illustrates yet another embodiment of clip. It comprises first and second projecting end portions 101, 103 and a connecting limb 105 which connects a first element with a second element. The first element is substantially the same as the first element of Figures 1, 2 or 4 and comprises first and second limbs 107, 109. The second limb connects with the end portion 101 by way of a drop limb 115 and bends 117, 119. The first limb 107 connects with the connecting limb 105 by way of bend 111 which is of the order of 90°. The second element differs from the previously described embodiment in that it comprises an arcuate element 124 which curves from bend 125 which connects it to the connecting limb 105 to a return bend 126. The return bend leads to a return limb 128 which has a bend 127 at the end thereof leading to the end portion 103. In this embodiment, when the clip is positioned on a flange, the second end portion 103 is inset from the edge of the flange. The return limb aids stability. The arcuate element extends over an are which straddles the location of the first element albeit to the opposite side of the flange. The arcuate element 124 and the return limb 128 preferably lie in a common plane. Preferably in use, they lie flat against the side of the flange. Preferably, in use, the first limb 107 of the first element lies flat against the flange, whilst the limb 109 is displaced from the flange. The second free end is disposed substantially perpendicular to a plane in which said arcuate element is disposed and/or the plane of the flange in which the clip is fitted. The first free end is disposed in a plane substantially parallel to the plane of the arcuate element and/or the plane of the flange to which the clip is fitted.

The embodiment of the invention all illustrate the presence of a drop limb. However, this is not essential and may be omitted.

## Claims

1. A clip for mounting on a flange and comprising a length of wire which is bent to form first (7, 9, 13; 107, 109, 113) and second (21, 22; 124, 128) elements which, in use, are disposed to one side and the other side of said flange, and a connecting limb portion (5; 105) traversing, in use, across the edge of the flange and connecting said first and second elements, first (1; 101) and second (3; 103) free ends associated respectively with the first and second elements, said first element comprising a first limb (7; 107) connecting with the connecting limb portion by a first bend (11; 111) and extending away therefrom over the flange and having a forward return bend (3; 113) to a second limb (9; 109) which extends back towards the edge of the flange at a position spaced from said first bend, said second limb leading to said first free end, characterised in that said second element connects with the other end of the connecting limb by way of a second bend (25; 125) and extends across said other side of the flange to said second free end, said second element having interconnected spaced positions which, in use, engage with said other side of the flange at spaced positions straddling the position of engagement of the first element with said one side of the flange.

2. A clip as claimed in claim 1 in which the second free end is connected to said second element by a bend (referred to hereinafter as a second element end bend) so that the second free end is disposed substantially perpendicular to a plane in which said second element is disposed.

3. A clip as claimed in claim 1 in which said second element between said spaced positions comprises a first portion which comprises a single curved limb or two or more straight limbs connected by respective bends.

4. A clip as claimed in anyone of the preceding claims in which the second element extends to a position remote from the connecting limb which is adjacent the edge of the flange.

5. A clip as claimed in anyone of claims 1 to 4 in which the first element and the second element extend by different amounts from the connecting limb portion.

6. A clip as claimed in anyone of the preceding claims in which the first and second limbs of the first element comprise a loop.

7. A clip as claimed in claim 6 in which the forward return bend is such that when applied to a flange one or both of the said first and second limbs is displaced from a plane of said flange.

8. A clip as claimed in anyone of claims 1 to 7 in which the end of the second element at which the projecting end is located is spaced from the edge of the flange and the projecting length of the first element exceeds the projecting length of second element.

9. A clip as claimed in claim 1 in which said second limb is provided with a bend positioned substantially in alignment with said first bend to provide a drop limb extending substantially in the same plane as the connecting limb, in use, so as to lie across the edge of the flange.

10. A clip as claimed in claim 9 in which said drop limb has a bend spaced from said drop bend which serves to position said first free end to extend from the edge of the flange to be disposed substantially perpendicular to said second free end.

11. A clip as claimed in claim 1 in which the second element comprises a first portion, which extends between said spaced positions straddling the first element, and a return limb which connects the first portion to the second free end.

12. A clip as claimed in claim 11 in which a return bend connects an end of the first portion remote from the connecting limb end with the return limb so that the second projecting end is disposed inset from the edge of the flange.

13. A clip as claimed in claim 12 in which said return bend is disposed, in use, adjacent the edge of the flange on which the clip is disposed.

14. A clip as claimed in anyone of claims 11 to 13 in which the first portion is an arcuate portion.

15. A clip as claimed in anyone of claims 11 to 14 in which the first portion and the return limb are disposed in substantially the same plane.
